# EUROPEAN PATENT APPLICATION

(11) **EP 3 069 944 A1**
(43) Date of publication of application: **21.09.2016**
(21) Application number: 14861380.5
(22) Date of filing: 11.11.2014
(51) Int. Cl.: B60S 3/04

(54) **VEHICULAR ATTACHED MATTER REMOVING DEVICE**

(30) Priority: 12.11.2013 JP 2013233857; 07.05.2014 JP 2014095957
(71) Applicant: Nihon Kouei Co., Ltd., Naha-shi, Okinawa 900-0032 (JP); Tokusa, Shigeo, Amagasaki-shi, Hyogo 661-0012 (JP)
(72) Inventor: TOKUSA Shigeo, Amagasaki-shi Hyogo 661-0012 (JP)
(74) Representative: Vossius & Partner Patentanwälte Rechtsanwälte mbB
(86) International application number: PCT/JP2014/079828
(87) International publication number: WO 2015/072447

(57) **Abstract**

The present invention is intended to provide a vehicular attached matter removing device that reduces a mechanical load on the device at lower facility and running costs and splash a vehicle with a sufficient amount of fluid at a high speed to remove efficiently attached matter such as dirt and rainwater. A tire cleaning device 1 includes cleaning tanks 2 that are filled with a cleaning liquid in which at least the ground-contact surfaces of tires T are immersed. When the vehicle passes through the cleaning tanks, the surfaces of the tires T can be cleaned by the cleaning liquid in the cleaning tanks 2. The tire cleaning device 1 is provided with pump means 11 that are pressed by the weight of the vehicle to jet the cleaning liquid in the cleaning tanks 2 onto the tires T.

## Description

### Technical Field

The present invention relates to a vehicular attached matter removing device suited for cleaning dirt and the like from the tires and the lower part of the car body and removing water droplets from the tires and the lower part of the car body.

### Background

The tires of vehicles such as dump trucks entering and leaving civil engineering construction sites are soiled by dirt and the like in the construction sites. Accordingly, when the vehicles go in general roads directly from the construction sites, the dirt and the like drop on the roads and make the road surfaces dirty, which necessitates frequent road cleaning. In particular, moist dirt and the like after the rain largely enter into the tire grooves and stick to the road surfaces leaving belt-like marks in a relatively long distance. This spoils the sight and the dried dirt becomes powder dust and soars into the sky to affect adversely the peripheral environments.

Therefore, to clean dirt off the vehicular underbody such as the tires before going in general roads from construction sites, the vehicle may pass through a cleaning tank filled with a cleaning liquid, or cleaning water may be jetted from a plurality of nozzles to the vehicle at a high speed to remove forcibly the dirt and the like from the underbody including the tires.

However, the former cleaning method can be carried out at low cost but may not produce sufficient cleaning performance. The latter cleaning method can achieve sufficient cleaning performance but requires cleaning facilities such as pumps and motors for driving the pumps, supply and drainage facilities for the cleaning liquid, power supply system for the motors, thereby causing entirely higher facility costs.

For solving these problems, there is proposed a tire cleaning device configured as described below to enhance the cleaning performance while eliminating the power supply system to reduce the facility costs for the cleaning facilities (for example, refer to Patent Document 1). The tire cleaning device is provided with continuous cleaning function plates such that: vehicle support ribs orthogonal to the moving direction of a vehicle are arranged at predetermined spacing in a water tank wider than the vehicle, at a height at which the gates have slopes and the middle part makes the tires slightly immersed in the water; a ladling function part having a water drawing function is provided at an end portion of an arm see-sawing around a bearing provided at the both ends of the vehicle support ribs in the middle part or in the direction of extension of the both ends; when the tires tread a tire tread portion provided at the end portion on the side opposite to a supporting point, the ladling function part leaps up to splash the water accumulated in the ladling function part onto the tires and the underbody of the vehicle to clean the vehicle; and after the vehicle passes through the ladling function part, the ladling function part goes underwater to prepare for the next tire cleaning.

Meanwhile, as for car carrying vessels, the floor surfaces are formed from steel plates or expanded metallic materials, and if the tires and others of the vehicle are wet by rainwater or the like, the floor surfaces become also wet and slippery, and the occurrence of accidental contacts is feared. In order to prevent this problem, there are proposed techniques for laying a non-slip sheet or applying a non-slip pavement on the floor surface of a car carrying vessel (for example, refer to Patent Documents 2 and 3).

### Citation List

### Patent Literatures

Patent Document 1: JP-A No.2011-88459
Patent Document 2: JP-A No.2012-26156
Patent Document 3: JP-A No.2011-20486

### Summary of Invention

### Technical Problem

However, in the tire cleaning device described in Patent Document 1, the ladling function part leaps upward during the passage of the vehicle to splash the water accumulated in the ladling function part onto the tires and the underbody of the vehicle for cleaning. Accordingly, the tire cleaning device described in Patent Document 1 has the following problems: when the vehicle passes through the water tank at a low speed, the water does not fully splash or produce no sufficient cleaning effect; when the vehicle passes through the water tank at a relatively high speed for vigorous water splashes, the tire cleaning device may be subjected to excessive force and become broken; since the amount of water splash is proportional to the size of the ladle, the ladling function part would have to be larger in size to increase the amount of water splash. Accordingly, the tire cleaning device may be subjected to excessive force during the passage of the vehicle and become broken; and the amount of water accumulated in the ladling function part varies depending on the level of water in the water tank, and it is difficult to splash a uniform amount of water at any time. Accordingly, cleaning performance is likely to be uneven and the dirt accumulated in the ladling function part may vigorously hit and damage the vehicle.

In addition, according to the inventions described in Patent Documents 2 and 3, the slippage of vehicles on the floor surface of the car carrying vessel, but it is necessary to cover the entire floor surface on which the vehicles run, thereby leading to higher facility costs.

An object of the present invention is to provide a vehicular attached matter removing device that reduces a mechanical load on the device at lower facility and running costs and splash a vehicle with a sufficient amount of fluid at a high speed to remove efficiently attached matter such as dirt and rainwater.

### Solution to Problem

A vehicular attached matter removing device according to the present invention includes a pump means that is pressurized by the weight of a vehicle to jet a fluid for removal of attached matter onto the vehicle.

In the vehicular attached matter removing device, the pump means is pressurized by the weight of the vehicle to jet the fluid onto the vehicle. When a cleaning liquid as the fluid is jetted onto the vehicle, the cleaning liquid can clean the attached matter such as dirt off the underbody including the tires and the lower part of the vehicle. When air such as the fluid is jetted onto the vehicle, the air can blow and remove rainwater or the like off the underbody including the tires and the lower part of the vehicle. In this manner, the pump means is pressurized by the weight of the vehicle to jet the fluid, which eliminates the need for a drive means such as a motor to reduce the manufacturing and running costs for the vehicular attached matter removing device. In addition, there is no need for a power supply system for operating the pump means, thereby reducing the costs for the entire cleaning facilities. The volume of the fluid to be stored in the pump means is increased to jet a sufficient amount of fluid onto the tires and the lower part of the vehicle. The opening area of a jet hole in the pump means is adjusted to regulate properly the jetting speed of the fluid. Further, the vehicle desirably passes through the pump means at a low speed in order to allow the weight of the vehicle to act sufficiently on the pump means. This reduces a mechanical load on the pump means during the passage of the vehicle as compared to the case where the vehicle passes at a high speed, which is favorable in improvement of durability of the pump means. The term cleaning liquid is used herein as a collective term of liquid substances such as drug solutions mixed with disinfectants against viruses such as avian influenza and disease germs, as well as water or detergent-added water.

It is preferred that the pump means jets the cleaning liquid or the air as the fluid onto the vehicle. When the cleaning liquid as the fluid is jetted onto the vehicle, the cleaning liquid can clean the attached matter such as dirt off the underbody including the tires and the lower part of the vehicle. When the air such as the fluid is jetted onto the vehicle, the air can blow and remove rainwater or the like off the underbody including the tires and the lower part of the vehicle.

It is preferred that the pump means includes an operation chamber into which the fluid is filled and a biasing means that biases the operation chamber toward an initial state. When the weight of the vehicle acts on the pump means, the operation chamber contracts and jets the fluid in the operation chamber onto the tires. When the weight of the vehicle no longer acts on the pump means, the biasing means returns the operation chamber to the initial state to flow the fluid in the cleaning tank into the operation chamber.

It is preferred that the pump means includes: a tread plate that has a jet hole for the fluid and is turnably pivoted at an end portion on the back side of the passage direction of the vehicle; an operation chamber forming member that forms the operation chamber under the tread plate; a biasing means that biases constantly the tread plate toward a forward and upward inclined state in the passage direction of the vehicle and biases the operation chamber toward the initial state in which the liquid is filled; and a check valve that permits inflow of the fluid from the cleaning tank into the operation chamber and restricts outflow of the fluid from the operation chamber to the cleaning tank. The configured pump means has a smaller parts count and can be produced at low cost in a favorable manner.

It is preferred that the tread plate is detachably attached to the pump means. According to this configuration, the inside of the operation chamber can be easily inspected by removing the tread plate. This makes it possible to prevent malfunction resulting from the accumulation of dirt and sand in the operation chamber, for example.

It is preferred that a cleaning tank filled with a cleaning liquid as the fluid is provided, the pump means is installed in the cleaning tank, and when the vehicle passes through the cleaning tank, the pump means is pressurized by the weight of the vehicle to jet the cleaning liquid in the cleaning tank onto the tires and remove the attached matter from the tires. In this case, when the vehicle passes through the cleaning tank, the tires of the vehicle are immersed in the cleaning liquid filled in the cleaning tank to clean the dirt and the like off the tire surfaces. In addition, the pump means is pressurized by the weight of the vehicle to jet the cleaning liquid in the cleaning tank onto the tires and the lower part of the vehicle and clean the dirt and the like off the tires and the lower part of the vehicle. Accordingly, it is possible to clean the tires and the lower part of the vehicle in an efficient manner.

It is preferred that, as the biasing means, a spring member and/or a float is provided to bias the operation chamber toward the initial state. The pump means can be returned to the initial state by the spring member alone. However, when the pump means is returned to the initial state by the float alone or the combination of the float and the spring member, it is possible to reduce a parts count and make the spring member smaller in size and biasing force, thereby reducing the manufacturing cost for the pump means in a favorable manner.

It is preferred that the pump means is installed in the cleaning tank at least a tire passage position. The pump means may be provided outside the cleaning tank. However, providing the pump means in the cleaning tank would eliminate the need for a pipe or the like and reduce a parts count, thereby reducing the manufacturing cost. By providing a plurality of pump means along the tire passage position, the plurality of pump means can jet sequentially the cleaning water onto the underbody including the tires and the lower part of the vehicle. Accordingly, it is possible to improve easily cleaning performance by increasing the number of the installed pump means.

It is preferred that the pump means jets the cleaning liquid onto the outer peripheral surfaces and side surfaces of the tires. To prevent merely the attachment of the dirt and the like to general roads, only the surfaces of the tires to be in contact with the road surface, that is, the outer peripheral surfaces of the tires may be cleaned. However, when the side surfaces of the tires are soiled by the dirt and the like, the outer appearance of the vehicle becomes deteriorated and the dirt would be dropped by wind and rain to soil the road surfaces, the parking spaces, and others. Accordingly, it is preferred to jet the cleaning liquid onto not only the outer peripheral surfaces of the tires but also the side surfaces of the tires to clean the outer peripheral surfaces and the side surfaces of the tires.

It is also preferred that the pump means jets part of the cleaning liquid onto a sludge removal part of the cleaning tank. The dirt and the like are heavy in weight and accumulate immediately under the cleaning position, and removing the accumulated dirt is troublesome. As in the present invention, however, jetting part of the cleaning liquid onto the sludge removal part of the cleaning tank makes it possible to collect the dirt and the like dropped into the cleaning tank by the cleaning liquid in the sludge removal part of the cleaning tank, thereby facilitating preferably the discharge of the dirt dropped into the cleaning tank.

It is preferred that a sludge removal conveyor is provided to discharge the dirt in the sludge removal part outside the cleaning tank. According to this configuration, the dirt accumulated in the sludge removal part of the cleaning tank can be easily discharged outside the cleaning tank in a favorable manner.

The components described in the section of the means to solve the problems can be arbitrarily combined with each other to form a vehicular attached matter removing device.

### Advantageous Effects of Invention

According to the vehicular attached matter removing device of the present invention, the pump means is pressurized by the weight of the vehicle to jet the fluid onto the vehicle. When the cleaning liquid as the fluid is jetted onto the vehicle, the cleaning liquid can clean the attached matter such as dirt off the underbody including the tires and the lower part of the vehicle. When the air such as the fluid is jetted onto the vehicle, the air can blow and remove rainwater or the like off the underbody including the tires and the lower part of the vehicle. In this manner, the pump means is pressurized by the weight of the vehicle to jet the fluid, which eliminates the need for a drive means such as a motor to reduce the manufacturing and running costs for the vehicular attached matter removing device. In addition, there is no need for a power supply system for operating the pump means, thereby reducing the costs for the entire cleaning facilities. The capacity of the pump means for storing the fluid is increased to jet a sufficient amount of fluid onto the tires and the lower part of the vehicle. The opening area of the jet hole in the pump means is adjusted to regulate properly the jetting speed of the fluid. Further, the vehicle desirably passes through the pump means at a low speed in order to allow the weight of the vehicle to act sufficiently on the pump means. This reduces a mechanical load on the pump means during the passage of the vehicle as compared to the case where the vehicle passes at a high speed, which is favorable in improvement of durability of the pump means.

### Brief Description of the Drawings

Fig. 1 is a plane view of a tire cleaning device;
Fig. 2 is a cross-sectional view of Fig. 1 taken along line II-II;
Fig. 3 is a cross-sectional view of Fig. 1 taken along line III-III;
Fig. 4 is a cross-sectional view of Fig. 3 taken along line IV-IV;
Fig. 5 is a cross-sectional view of Fig. 3 taken along line V-V;
Fig. 6 is an illustrative diagram of a tread plate attachment structure;
Fig. 7 is a plane view of a tire cleaning device of another embodiment;
Fig. 8 is a cross-sectional view of Fig. 7 taken along line VIII-VIII;
Fig. 9 is a cross-sectional view of Fig. 7 taken along line IX-IX;
Fig. 10 is a cross-sectional view of Fig. 7 taken along line X-X;
Fig. 11 is a cross-sectional view of Fig. 7 taken along line XI-XI; and
Fig. 12 is a plane view of main components of the tire cleaning device from which floats are removed.

### Description of Embodiments

An embodiment for carrying out the present invention will be described with reference to the drawings. In the embodiment, a vehicular attached matter removing device according to the present invention is applied to a tire cleaning device that cleans the tires of a vehicle and removes dirt and the like from the tires. In the following description, the front, back, left and right sides here are defined with reference to the front, back, left and right sides of the vehicle passing through the tire cleaning device.

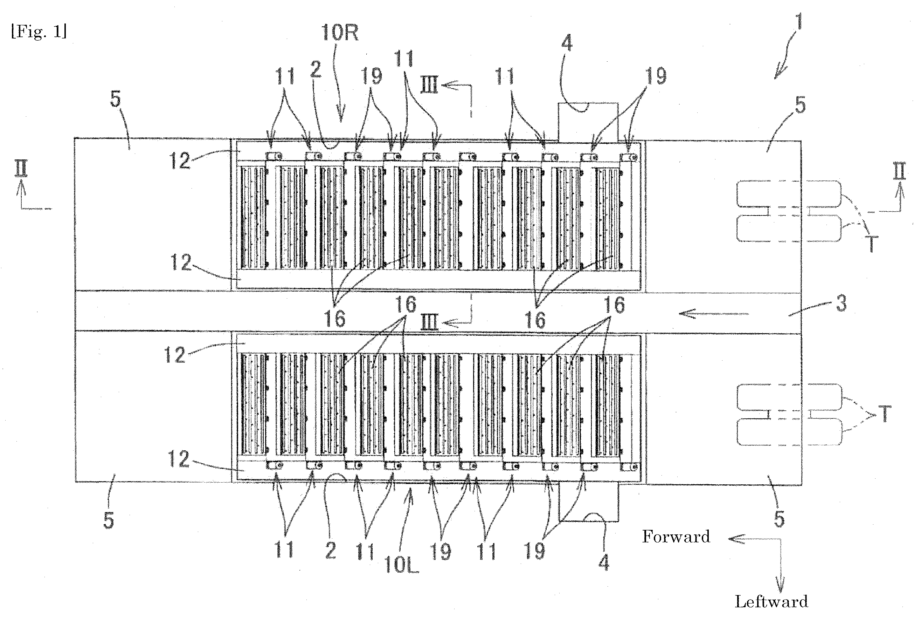

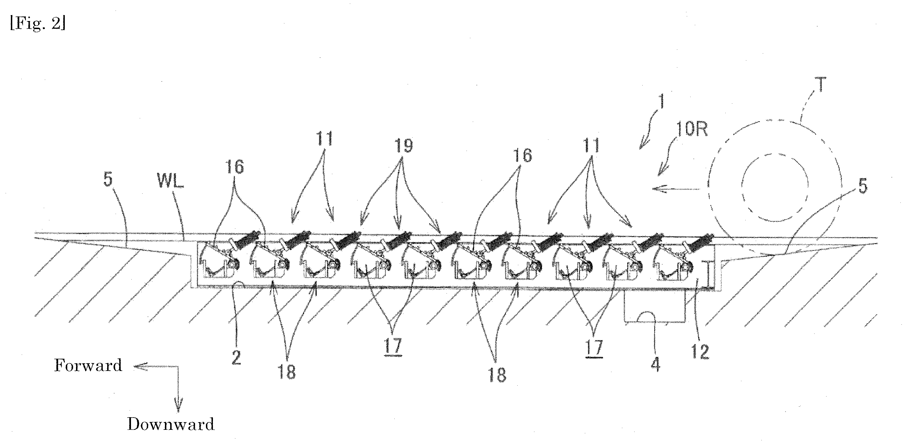

As illustrated in Figs. 1 and 2, a tire cleaning device 1 as a vehicular attached matter removing device includes a pair of left and right cleaning tanks 2 that is constructed in an installation location at a site of work such as civil engineering construction, and a pair of left and right cleaning units 10L and 10R that is installed in the left and right cleaning tanks 2. A plurality of pump means 11 is provided in the left and right cleaning units 10L and 10R along a passage direction of a vehicle. In the tire cleaning device 1, when the vehicle passes through the cleaning tanks 2, left and right tires T of the vehicle pass on the left and right cleaning units 10L and 10R. Accordingly, the tires T of the vehicle are immersed in a cleaning liquid filled in the cleaning tanks 2 to clean the dirt and the like off the surfaces of the tires T, and the plurality of pump means 11 provided in the left and right cleaning units 10L and 10R are sequentially pressurized by the weight of the vehicle, and the pressurized pump means 11 jet sequentially the cleaning liquid in the cleaning tanks 2 onto the tires T to clean the dirt and the like off the tires T. However, the cleaning liquid can be jetted onto not only the tires T but also the underbody including the tires T and the lower part of the vehicle.

The left and right cleaning tanks 2 are constructed by digging in the installation location at a site of work such as civil engineering construction. A dividing wall 3 is formed between the left and right cleaning tanks 2. Deep sludge removal parts 4 are formed horizontally at the back parts of the left and right cleaning tanks 2 in such a manner to protrude laterally. Downward slopes 5 are formed at the front and back sides of the left and right cleaning tanks 2 in a direction toward the cleaning tanks 2. A liquid level WL of the cleaning water in the cleaning tanks 2 is preferably always uniform such that, when the vehicle passes through the cleaning tanks 2, the lower end portions of the tires T of the vehicle are immersed in the cleaning water. However, the cleaning water in the cleaning tanks 2 scatters outside the cleaning tanks 2 during cleaning of the tires T or sticks to the tires T and moves outside the cleaning tanks 2. As a result, basically, the cleaning water thus decreases gradually with a larger number of times of cleaning. In order to allow the liquid level WL of the cleaning water to be set appropriately at any time, it is preferred to provide a float valve or the like to supply a necessary amount of cleaning liquid into the cleaning tanks 2, for example. It is also preferred to provide a septic tank to purify the remaining cleaning water so as not to contaminate the peripheral environments by the outflow of the cleaning liquid from the cleaning tanks 2, for example. In this example, the pair of left and right cleaning tanks 2 is provided. Alternatively, one cleaning tank may be provided with the left and right cleaning units 10L and 10R at a lateral space therebetween.

The cleaning liquid to be filled into the cleaning tanks 2 is preferably tap water but may be water from rivers, lakes, reservoirs, or the like. It is also preferred to add a detergent to the water or use a disinfectant for sterilizing avian influenza virus or the like instead of the water.

Next, the left and right cleaning units 10L and 10R will be described. The cleaning units 10L and 10R are symmetrically configured and thus only the right cleaning unit 10R will be explained below without description of the left cleaning unit 10L. The left and right cleaning units 10L and 10R may be assembled at a work site, but are preferably assembled at a plant, transported to the work site, and installed by a crane or the like into the cleaning tanks 2 constructed at the work site.

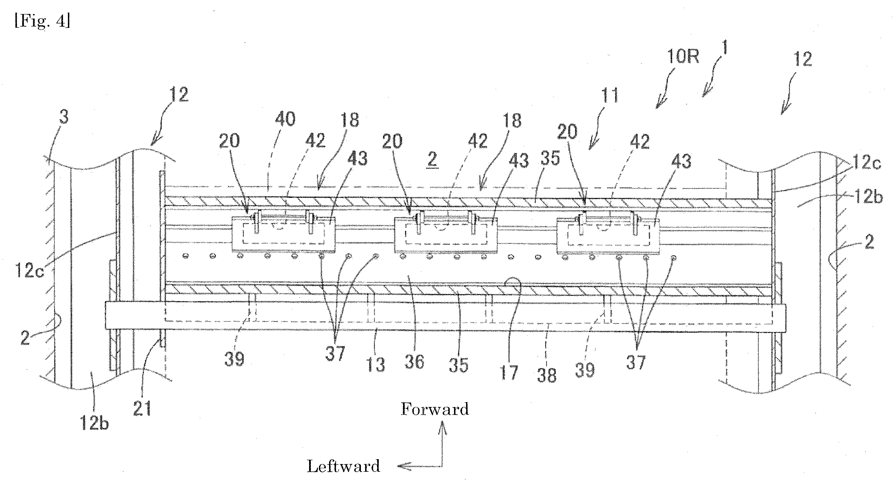

As illustrated in Figs. 1 to 5, a pair of left and right H-shaped steels 12 extending over the entire length of the cleaning tanks 2 is provided in parallel at a lateral space therebetween in the right end portion and the left end portion of the right cleaning tank 2 such that a pair of upper and lower flange parts 12a and 12b is arranged in a horizontal direction and a web part 12c is arranged in a vertical direction. The plurality of pump means 11 is provided at regular intervals between the left and right H-shaped steels 12 along the longitudinal direction.

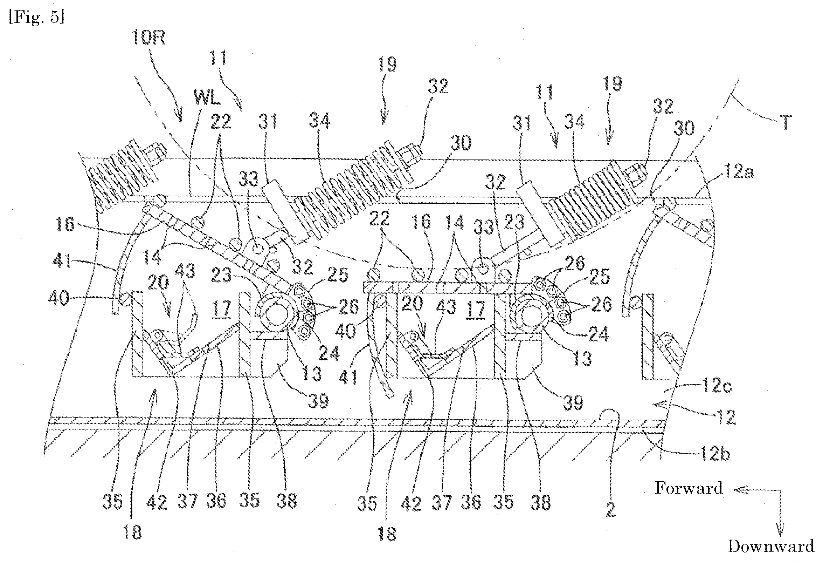

Each of the pump means 11 includes: a pivot shaft 13 that hangs over middle step portions of the web parts 12c of the left and right H-shaped steels 12; a tread plate 16 having cleaning liquid jet holes 14 and 15 that is turnably pivoted at its back end portion by the pivot shaft 13 and turns freely into an upward and forward inclined initial posture as in the front pump means illustrated in Fig. 5 and an approximately horizontal jet-completed posture as in the back pump means illustrated in Fig. 5; an operation chamber forming member 18 that forms an operation chamber 17 under the tread plate 16; a biasing means 19 that biases constantly the tread plate 16 toward the initial posture; and a check valve 20 that permits inflow of the cleaning liquid from the cleaning tanks 2 into the operation chamber 17 and prevents outflow of the cleaning liquid from the operation chamber 17 to the cleaning tanks 2.

The tread plate 16 is formed from a horizontally elongated, flat metallic plate. The right end portion of the tread plate 16 is slidably arranged almost without making a gap at the web part 12c of the right H-shaped steel 12. The left end portion of the tread plate 16 is slidably arranged almost without making a gap at a side part block plate 21 extending downward from the right end portion of the upper flange part 12a of the left H-shaped steel 12. The both left and right end portions of the pivot shaft 13 are fixed to the middle step portions of the web parts 12c of the left and right H-shaped steels 12. The middle portion of the pivot shaft 13 penetrates through the side part block plate 21 almost without making a gap.

Four horizontally extending non-slip members 22 composed of four metallic bars are welded and fixed with front-back spaces therebetween to the upper surface of the tread plate 16. Between the adjacent non-slip members 22, a plurality of outer peripheral surface cleaning jet holes 14 penetrates through the tread plate 16 in almost the orthogonal direction to jet the cleaning liquid mainly onto the outer peripheral surfaces of the tires T. In addition, a pair of left and right side surface cleaning jet holes 15 penetrates diagonally through the tread plate 16 to jet the cleaning liquid mainly onto the side surfaces of the tires T. The non-slip members 22 may be configured in an arbitrary manner as far as the non-slip members 22 can prevent the slippage of the tires T on the tread plate 16, and for example, the cross section shape and the number of the non-slip members 22 can be set arbitrarily. In addition, the arrangement positions and the numbers of the outer peripheral surface cleaning jet holes 14 and the side surface cleaning jet holes 15 can be set arbitrarily.

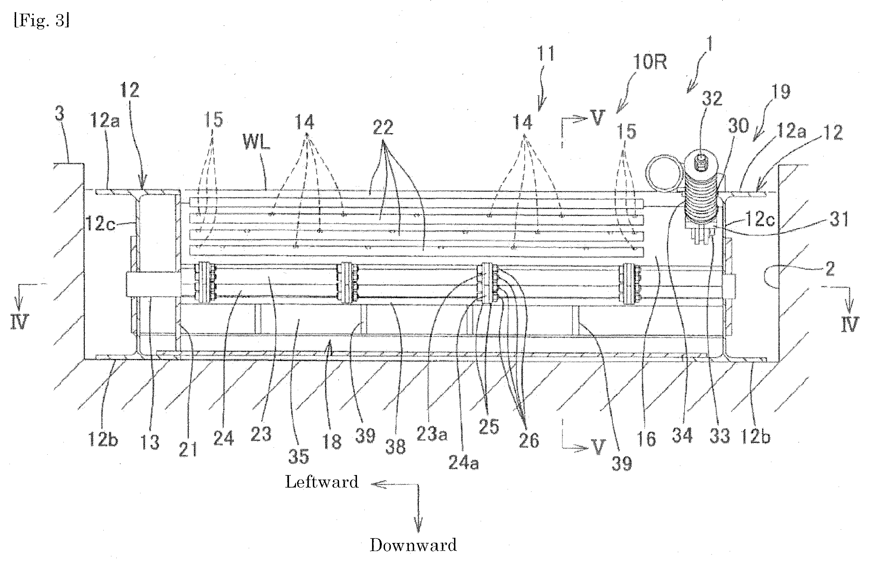

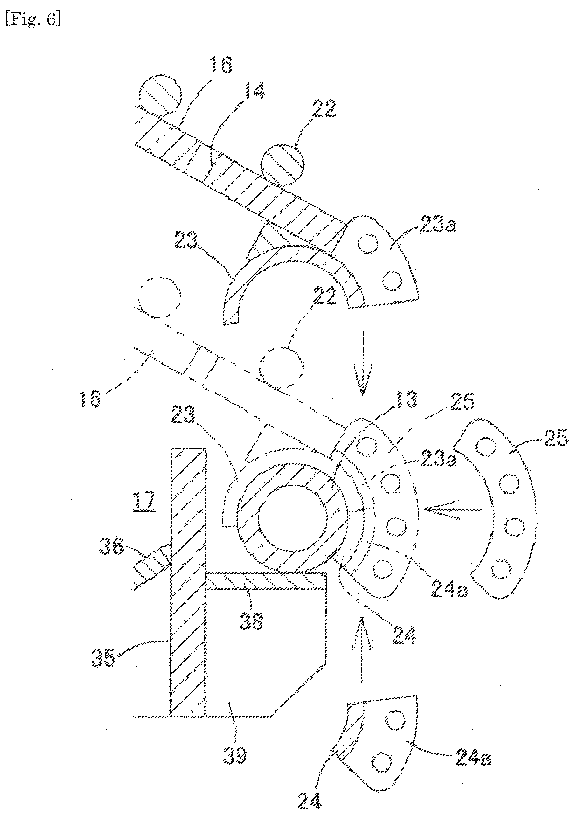

To attach turnably the tread plate 16 to the pivot shaft 13, as illustrated in Figs. 3, 5, and 6, a semi-cylindrical part 23 is welded and fixed with a downward opening to the lower side of the back end portion of the tread plate 16 along the entire length of the tread plate 16. The tread plate 16 causes the semi-cylindrical part 23 to fit with the upper part of the pivot shaft 13 and is supported by the pivot shaft 13. To regulate the movement of the tread plate 16 upward from the pivot shaft 13, a partially cylindrical retaining member 24 connected to the lower end edge of the semi-cylindrical part 23 is provided. A plurality of outward protruding connection flanges 23a and 24a is formed with a longitudinal space therebetween on the semi-cylindrical part 23 and the retaining member 24, respectively, at positions longitudinally aligned with the semi-cylindrical part 23 and the retaining member 24. The connection flange 23a of the semi-cylindrical part 23 and the connection flange 24a of the retaining member 24 are in abutment with each other at end portions, and arc-shaped connection plates 25 are arranged on the both sides of the connection flanges 23a and 24a. The upper half portions and lower half portions of the two connection plates 25 are connected by bolts 26 to the connection flange 23a of the semi-cylindrical part 23 and the connection flange 24a of the retaining member 24, whereby they are integrally connected together. By fixing the retaining member 24 to the semi-cylindrical part 23 and engaging the retaining member 24 with the pivot shaft 13, the tread plate 16 is held to be turnable relative to the pivot shaft 13 but not to move upward. According to this configuration, after the construction of the cleaning units 10L and 10R, the tread plate 16 can be detached by removing the bolts 26 to inspect favorably the inside of the operation chamber 17.

The biasing means 19 will be described. A cutout portion 30 is formed at the left side of the upper flange part 12a of the right H-shaped steel 12 at a position approximately corresponding to the pivot shaft 13 in the front-back direction. A spring support plate 31 is provided at the front edge of the cutout portion 30 in a diagonally downward and backward direction. An operation rod 32 is movably inserted into the spring support plate 31 and extends orthogonally toward the tread plate 16. The front end portion of the operation rod 32 is turnably connected to the tread plate 16 via a horizontal pin member 33. A spring member 34 is fitted onto the operation rod 32 behind the spring support plate 31 to bias constantly the tread plate 16 toward the initial posture. When the tires T of the vehicle ride on the tread plates 16, the tread plates 16 turn toward the horizontal jet-completed posture against the biasing force of the spring member 34. When the tires T of the vehicle pass through the tread plates 16, the tread plates 16 return to the initial posture by the biasing force of the spring member 34. The biasing means 19 may be configured in an arbitrary manner as far as the biasing means 19 can bias constantly the tread plate 16 toward the initial posture.

The operation chamber forming member 18 for forming the operation chamber 17 under the tread plate 16 will be described. At the front side of the pivot shaft 13, a pair of front and back operation chamber forming plates 35 extends in the horizontal direction between the web part 12c of the right H-shaped steel 12 and the side part block plate 21, and hang vertically in approximately parallel with a space therebetween in the front-back direction. The right end portions of the two operation chamber forming plates 35 are welded and fixed to the web part 12c in a liquid-tight manner, and the left end portions of the same are welded and fixed to the side part block plate 21 in a liquid-tight manner. An approximately L-shaped bottom part block plate 36 is provided with an angular portion facing downward to block the lower end openings of the front and back operation chamber forming plates 35. The front and back end edges of the bottom part block plate 36 are welded and fixed in a liquid-tight manner to the middle portions of the operation chamber forming plates 35 in the height direction. The right end portion of the bottom part block plate 36 is welded and fixed to the web part 12c in a liquid-tight manner, and the left end portion of the same is welded and fixed to the side part block plate 21 in a liquid-tight manner. Sludge removal jet holes 37 are formed in the bottom part block plate 36 in such a manner as to open in a diagonally backward direction. When the inside of the operation chamber 17 is pressurized, part of the cleaning liquid in the operation chamber 17 is jetted through the sludge removal jet holes 37 to feed the dirt and sand sunken in the bottom portions of the cleaning tanks 2 to the sludge removal parts 4.

A shaft support plate 38 is provided at the middle portion of the back operation chamber forming plate 35 in the height direction and extends backward to receive the lower end portion of the pivot shaft 13 from the lower side. The shaft support plate 38 is welded and fixed to the middle portion of the back operation chamber forming plate 35 in the height direction, and is welded and fixed to the back operation chamber forming plate 35 via bracket plates 39 spaced in the horizontal direction. The shaft support plate 38 receives part of the load of the vehicle acting on the middle portion of the pivot shaft 13 to disperse the load acting on the both end portions of the pivot shaft 13. The shaft support plate 38 is also configured to prevent leakage of the cleaning liquid in the operation chamber 17 from the gap between the back operation chamber forming plate 35 and the pivot shaft 13 into the cleaning tanks 2.

A block rod 40 composed of a metallic bar extends in the horizontal direction is fixed to the upper end portion of the front surface of the front operation chamber forming plate 35 along the entire length. An arc-shaped front part block plate 41 centered on the pivot shaft 13 protrudes downward and is welded and fixed to the front end portion of the tread plate 16. The back surface of the front part block plate 41 slides on the front end portion of the block rod 40 almost without making a gap to allow the tread plate 16 to turn while preventing the outflow of the cleaning liquid from the operation chamber 17 into the cleaning tanks 2.

Each of the operation chambers 17 is formed as a closed space by the tread plate 16, the front part block plate 41, the front and back operation chamber forming plates 35, the bottom part block plate 36, the shaft support plate 38, the pivot shaft 13, the web part 12c of the right H-shaped steel 12, and the side part block plate 21.

The check valve 20 will be described. Three square introduction ports 42 are formed and spaced horizontally in the lower end portion of the bottom part block plate 36 to introduce the cleaning liquid in the cleaning tanks 2 into the operation chamber 17. In the operation chamber 17, three valve bodies 43 capable of blocking the introduction ports 42 are turnably provided on the bottom part block plate 36. When the tires T of the vehicle pass through the tread plates 16 and the tread plates 16 turn from the initial posture to the jet-completed posture, the introduction ports 42 are blocked by the valve bodies 43 to pressurize the inside of the operation chambers 17. When the tires T pass through the tread plates 16 and the tread plates 16 turn from the jet-completed posture to the initial posture by the biasing force of the biasing means 19, the valve bodies 43 turn upward to open the introduction ports 42, whereby the cleaning liquid in the cleaning tanks 2 is introduced into the operation chambers 17. The liquid level WL in the cleaning tanks 2 is preferably set above the outer peripheral surface cleaning liquid jet holes 14 and the side surface cleaning liquid jet holes 15 such that the external air is not introduced from the outer peripheral surface cleaning liquid jet holes 14 and the cleaning liquid jet holes 15 into the operation chamber 17.

In the tire cleaning device 1, when the vehicle passes through the cleaning tanks 2, the lower end portions of the tires T of the vehicle are immersed in the cleaning liquid filled in the cleaning tanks 2 to clean the dirt and the like off the surfaces of the tires T. In addition, the pump means 11 are pressurized by the weight of the vehicle to jet the cleaning liquid in the cleaning tanks 2 onto the tires T to clean the dirt and the like off the tires T. More specifically, the tires T of the vehicle sequentially pass on the tread plates 16 of the pump means 11. When the tires T ride on the tread plates 16, the tread plates 16 turn from the initial posture to the jet-completed posture by the weight of the vehicle against the biasing force of the spring members 34 to pressurize the operation chambers 17. Accordingly, the cleaning liquid in the operation chamber 17 is jetted from the cleaning liquid jet holes 14 and the side surface cleaning liquid jet holes 15 onto the peripheral surfaces and side surfaces of the tires T to clean the tires T. In addition, the cleaning liquid in the operation chamber 17 is jetted from the sludge removal holes onto the sludge removal parts 4 in the cleaning tanks 2 to collect the dirt and sand accumulated in the cleaning tanks 2 to the sludge removal parts 4. Meanwhile, when the tires T pass through the tread plates 16, the tread plates 16 return to the initial posture by the biasing force of the spring members 34. At that time, the inside of the operation chamber 17 is brought under negative pressure to suck the cleaning liquid in the cleaning tanks 2 from the outer peripheral surface cleaning liquid jet holes 14, the side surface cleaning liquid jet holes 15, and the sludge removal jet holes 37 into the operation chamber 17. In addition, the valve bodies 43 of the check valve 20 turn upward to suck the cleaning liquid in the lower parts of the cleaning tanks 2 from the introduction ports 42 into the operation chamber 17. Accordingly, each time the tires T of the vehicle ride on the tread plates 16 of the pump means 11, the cleaning liquid is jetted from the outer peripheral surface cleaning liquid jet holes 14 and the cleaning liquid jet holes 15 onto the tires T to clean the tires T, and the dirt in the cleaning tanks 2 is collected from the sludge removal jet holes 37 into the sludge removal parts 4.

According to the tire cleaning device 1 as described above, the pump means 11 are pressurized by the weight of the vehicle to jet the cleaning liquid. This eliminates the need for a driving means such as a motor and reduces the manufacturing and running costs for the tire cleaning device 1. In addition, there is no need for a power supply system for operating the pump means 11, thereby reducing the facility costs for the entire cleaning facilities. The capacity of the pump means 11 for storing the cleaning water is increased to jet a sufficient amount of cleaning water onto the tires T and the lower part of the vehicle. The opening areas of the jet holes 14 and 15 of the pump means 11 are adjusted to regulate the jetting speed of the cleaning water in an appropriate manner. Further, the vehicle desirably passes through the cleaning tanks 2 at a low speed in order to allow the weight of the vehicle to act sufficiently on the pump means 11 and enhance cleaning performance. This reduces the mechanical load on the pump means 11 during the passage of the vehicle, thereby improving durability of the pump means 11. Moreover, the dirt and sand attached to the vehicle are collected into the sludge removal parts 4 to discharge easily the dirt and sand dropped in the cleaning tanks 2.

Next, another embodiment of the tire cleaning device 1 will be described.

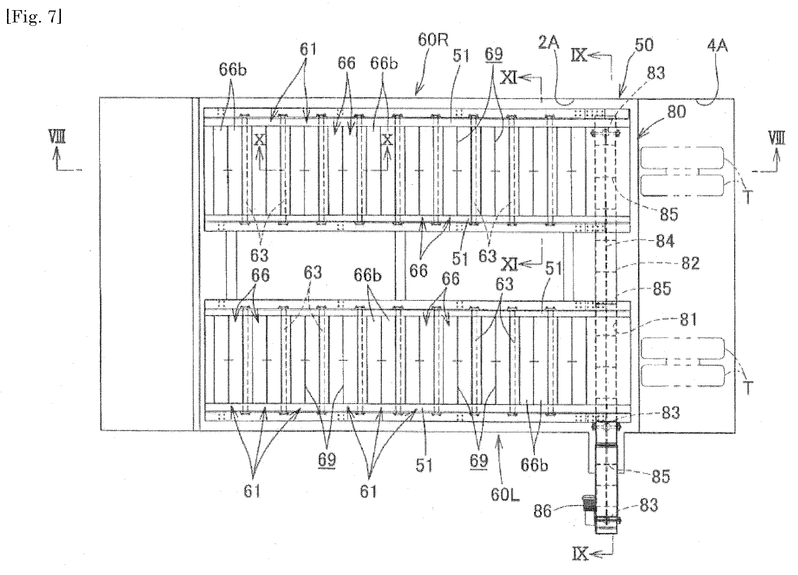

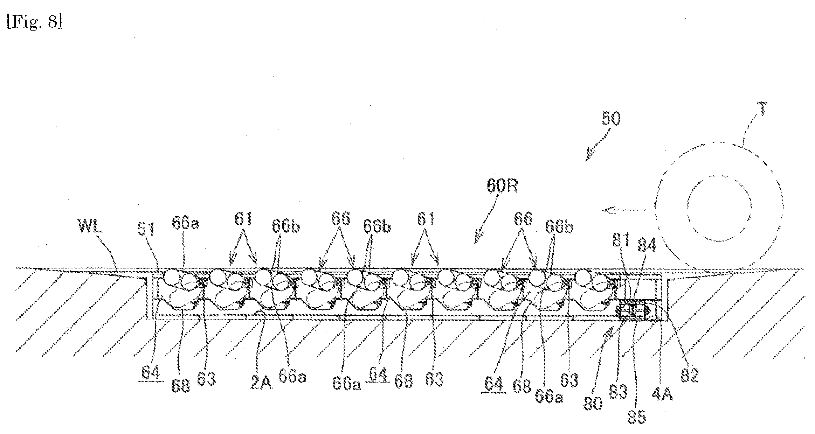

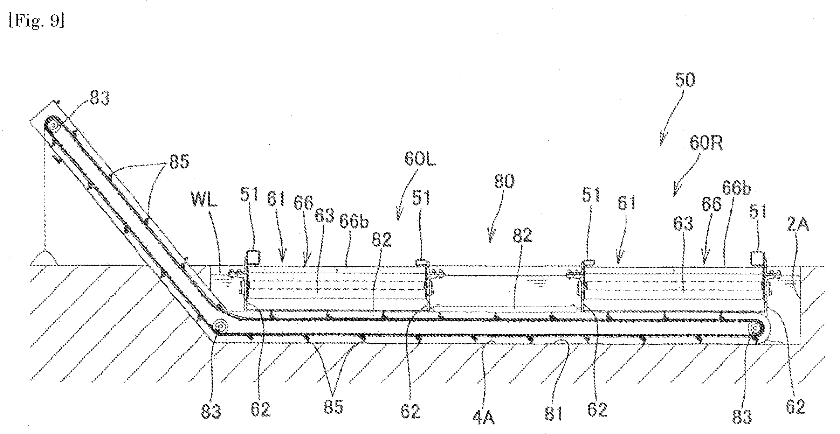

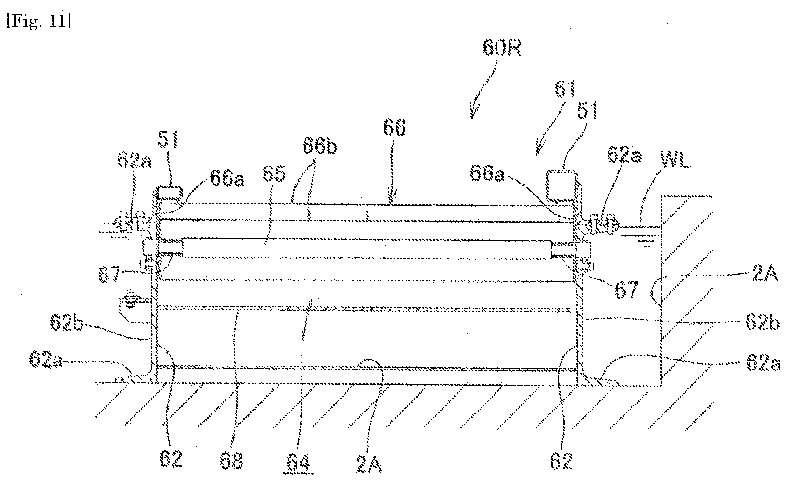

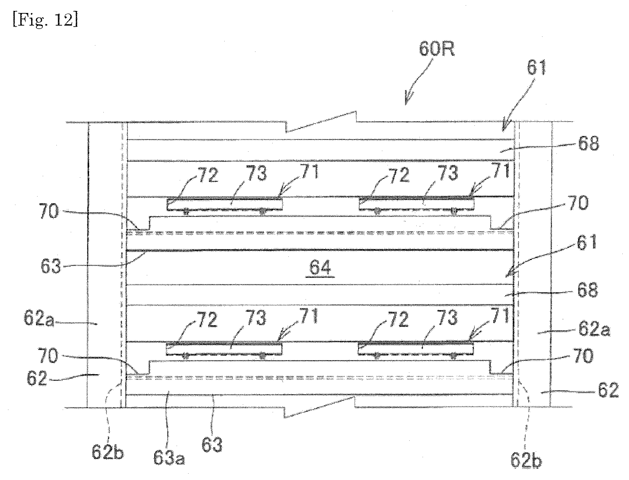

As illustrated in Figs. 7 to 12, a tire cleaning device 50 has a cleaning tank 2A formed by integrating the left and right cleaning tanks 2 without the dividing wall 3 in the foregoing embodiment. Instead of the left and right cleaning units 10L and 10R, cleaning units 60L and 60R with a plurality of pump means 61 spaced in the front-back direction are installed at the left and right parts of the cleaning tank 2A. A sludge removal conveyor 80 is provided in a sludge removal part 4A at the back end portion of the cleaning tank 2A to discharge dirt outside the cleaning tank 2A.

The sludge removal conveyor 80 includes: a path forming member 82 that forms a sludge removal path 81 extending from the right to left end portions of the back end portion of the cleaning tank 2A and further extending from the left end portion of the cleaning tank 2A in a diagonally upward and leftward direction; three sprockets 83 that are arranged with axes placed in the front-back direction at the both end portions and the middle bent portion of the sludge removal path 81; an endless loop-like chain 84 that is provided in a stretched state on the three sprockets 83; feed pieces 85 that are elongated in the front-back direction and fixed at regular intervals to the chain 84 and arranged at the upper and lower parts of the sludge removal path 81; and a motor 86 that feeds and drives the chain 84. The motor 86 feeds and drives the chain 84 to move the feed pieces 85 along the sludge removal path 81 and discharge the dirt and sand accumulated in the sludge removal part 4A outside the cleaning tank 2A through the sludge removal path 81. However, the sludge removal conveyor 80 may be configured in any other manner and may be a belt conveyor, a screw conveyor, or the like, for example. Alternatively, the sludge removal conveyor 80 may be omitted such that the dirt accumulated in the sludge removal part 4A is manually discharged on a regular basis as in the foregoing embodiment.

Next, the left and right cleaning units 60L and 60R will be described. The two cleaning units 60L and 60R are symmetrically configured, and only the right cleaning unit 60R will be explained below without description of the left cleaning unit 60L. The left and right cleaning units 60L and 60R may be assembled at a work site, but are preferably assembled at a plant, transported to the work site, and installed by a crane or the like into the cleaning tank 2A constructed at the work site.

As illustrated in Figs. 7 to 12, side part frames 62 composed of a pair of left and right channel steels with an angular-C shaped cross section extending along the entire length of the cleaning tank 2A are provided in parallel at a space therebetween in the horizontal direction such that upper and lower flange parts 62a are arranged in the horizontal direction, connection portions 62b connecting the upper and lower flange parts 62a are arranged in the vertical direction, and the connection portions 62b are positioned to be opposed to each other. Wheel guides 51 are provided on the upper sides of the left and right side part frames 62 along the entire length of the side part frames 62. The tires T of the vehicle are guided by the left and right wheel guides 51 so as not to run off the cleaning unit 60R outward.

A plurality of dividing members 63 composed of H-shaped steels is arranged on the upper parts of the left and right side part frames 62 at constant spaces along the longitudinal direction such that upper and lower flange parts 63a are arranged in the horizontal direction and web part 63b are arranged in the vertical direction. The cleaning unit 60R is provided with a plurality of pump means 61 at regular spaces in the front-back direction with an operation chamber 64 as a space surrounded by the left and right side part frames 62 and the front and back dividing members 63.

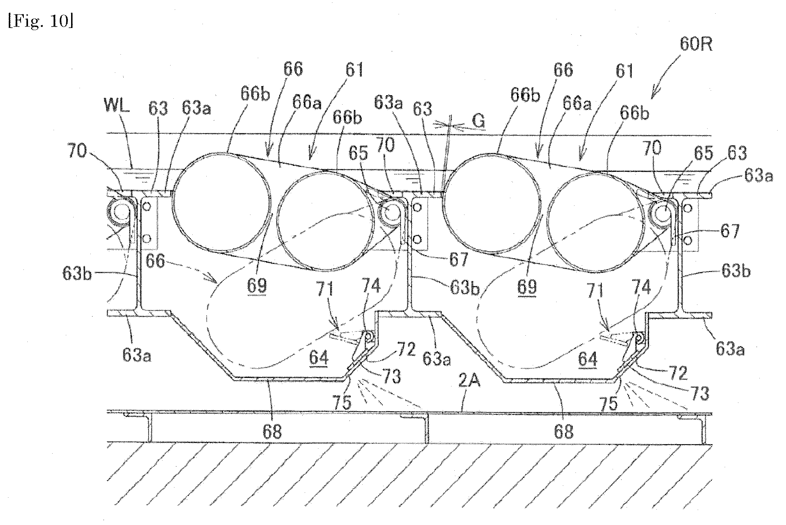

The pump means 61 each include: a pivot shaft 65 that hangs over the left and right channel steel connection portions 62b in the horizontal direction; a float 66 that is turnably pivoted at the back end portion by the pivot shaft 65 is turnable between the diagonally forward and upward initial posture shown by a solid line in Fig. 10 and the diagonally forward and downward jet-completed posture shown by a virtual line in Fig. 10, and is arranged to block the upper surface side of the operation chamber 64 in the initial posture; a spring member 67 that biases constantly the float 66 toward the initial posture; a lower surface block plate 68 that blocks the lower surface side of the operation chamber 64; and a check valve 71 that permits inflow of the cleaning liquid from the cleaning tank 2A into the operation chamber 64 and restricts outflow of the cleaning liquid from the operation chamber 64 to the cleaning tank 2A.

The float 66 includes a pair of left and right support plates 66a that is slidably arranged on the face-to-face sides of the left and right channel steel connection portions 62b without almost making a gap; and a pair of front and back float main bodies 66b that also serves as hollow cylindrical tread plates fixed to the support plates 66a such that the both end portions are blocked in a liquid-tight manner. A cleaning jet hole 69 is formed between the pair of adjacent float main bodies 66b to jet upward the cleaning liquid in the operation chamber 64. The back float main body 66b and the pivot shaft 65 are arranged very closely. A gap G between the front float main body 66b and the front dividing member 63 becomes smallest to be approximately zero in the initial posture, and becomes larger with increasing proximity to the jet-completed posture from the initial posture. Reference signs 70 indicate cutout portions that are provided at left and right end portions of the front part of the upper flange part 62a such that, when the float 66 turns to the initial posture, the support plates 66a of the float 66 do not contact with the upper flange part 62a.

The float 66 is entirely immersed in the cleaning liquid in the initial posture such that buoyant force toward the initial posture acts constantly on the float 66. When the tires T of the vehicle ride on the floats 66 and the floats 66 turn from the initial posture to the jet-completed posture, the pressure of the cleaning liquid in the operation chambers 64 becomes higher and the cleaning liquid in the operation chambers 64 is jetted vigorously upward from the cleaning jet holes 69 to clean the dirt and the like off the tires T and the underbody of the vehicle. It is estimated that the cleaning liquid is jetted vigorously upward from the cleaning jet hole 69 because the main float bodies 66b are circular in cross section and the spacing between the front and back float main bodies 66b becomes smaller from the lower end portions of the front and back float main bodies 66b to the cleaning jet hole 69, and the flow velocity of the cleaning liquid in the cleaning jet hole 69 becomes faster. As the float 66 approaches the jet completed posture from the initial posture, the gap G between the float 66 and the front dividing member 63 becomes wider and the cleaning liquid in the operation chamber 64 is also discharged from the gap G into the cleaning tank 2A. However, testing a prototyped device has revealed that, even when the gap G is not blocked, the gap G is smaller than the opening width of the cleaning jet hole 69 until the float 66 turns about 10° from the initial posture to the jet-completed posture, for example, and the cleaning liquid in the operation chamber 64 is jetted vigorously upward from the cleaning jet hole 69 to clean sufficiently the tires T and the underbody of the vehicle. By setting the gap G to become wider along with the turning from the initial posture to the jet-completed posture, it is possible to prevent reduction in durability of the pump means 61 due to excessive increase of pressure in the operation chamber 64. In addition, when the float 66 returns to the initial posture from the jet-completed posture, the cleaning liquid also flows from the gap G into the operation chamber 64, thereby allowing the float 66 to return rapidly to the initial position. However, when the float 66 turns from the initial posture toward the jet completed posture by a certain angle of 20° or less, for example, the gap between the front float main body 66b and the front dividing member 63 may become the smallest to lengthen the inner pressure increase time of the operation chamber 64.

Spring members 67 composed of torsion coil springs are fitted onto the both end portions of the pivot shaft 65. First end portions of the spring members 67 are locked in the support plates 66a, and second end portions of the spring members 67 are pressed and brought into contact with the web parts 63b of the dividing members 63 to bias constantly the float 66 toward the initial posture. To assemble the spring members 67 to the float 66, the float 66 is further turned upward beyond the initial posture so that the first end portions of the spring members 67 can be locked in the support plates 66a without having to distort the spring members 67, whereby the spring members 67 can be easily assembled to the float 66. In addition, the float 66 is constantly biased toward the initial posture by its buoyant force, and the spring members 67 may not be provided. However, the spring members 67 are preferably used in combination with the float 66 to increase the speed of return of the float 66 to the initial posture.

The central portion of the lower surface block plate 68 in the front-back direction protrudes downward. The front and back end edges of the lower surface block plate 68 are welded and fixed to the flange parts 62a of the front and back dividing members 63. The left and right side edge portions of the lower block plate 68 are welded and fixed to the connection portions 62b of the left and right side frames 62. The lower surface of the operation chamber 64 is blocked by the lower surface block plate 68.

The check valve 71 will be described. A pair of horizontally elongated left and right opening portions 72 is formed in a forward and downward inclined surface at the back part of the lower surface block surface 68. Valve bodies 73 capable of opening and closing the opening portions 72 are provided at the back part of the lower surface block plate 68 in such a manner as to be turnable around a horizontal shaft member 74. When the inner pressure of the operation chamber 64 becomes higher, the opening portions 72 are blocked by the valve bodies 73. When the inner pressure of the operation chamber 64 becomes negative pressure, the opening portions 72 are opened to flow the cleaning liquid in the cleaning tank 2A into the operation chamber 64 through the opening portions 72. A horizontally elongated sludge removal jet hole 75 is formed in the lower end of the opening portions 72 in a diagonally downward and backward direction, and communicates with the cleaning tank 2A while the opening portions 72 are closed by the valve bodies 73. When the inner pressure of the operation chamber 64 becomes higher, part of the cleaning liquid in the operation chamber 64 is jetted from the sludge removal jet holes 75together with the dirt and sand in the operation chamber 64 in a diagonally downward and backward, and discharged into the cleaning tank 2A under the lower surface block surface 68. In addition, the dirt and sand sunken in the bottom portion of the cleaning tank 2A are fed to the sludge removal part 4A.

In the tire cleaning device 50, when the vehicle passes through the cleaning tank 2A, the lower end portions of the tires T of the vehicle are immersed in the cleaning liquid filled in the cleaning tank 2A to clean the dirt and the like off the surfaces of the tires T. In addition, the pump means 61 are pressurized by the weight of the vehicle to jet upward the cleaning liquid in the operation chambers 64 of the pump means 61 to clean the dirt and the like off the tires T and the lower part of the vehicle. More specifically, the tires T of the vehicle pass sequentially on the floats 66 of the pump means 61. When the tires T ride on the floats 66, the floats 66 turn from the initial posture to the jet-completed posture by the weight of the vehicle against the buoyant force of the floats 66 and the biasing force of the spring members 67, and the operation chambers 64 are pressurized to jet the cleaning liquid in the operation chambers 64 upward from the cleaning jet holes 69 to clean the tires T and the lower part of the vehicle. At that time, part of the cleaning liquid in the operation chamber 64 is jetted from the sludge removal jet hole 75 onto the sludge removal part 4A of the cleaning tank 2A to collect the dirt and sand accumulated in the cleaning tank 2A into the sludge removal part 4A. Meanwhile, when the tires T pass through the floats 66, the floats 66 return to the initial posture by the buoyant force of the floats 66 and the biasing force of the spring members 67. At that time, however, the inner pressure of the operation chamber 64 becomes negative pressure and the cleaning liquid in the cleaning tank 2A is sucked into the operation chamber 64 through the gap G between the float 66 and the front dividing member 63 and the cleaning jet hole 69. In addition, the valve bodies 73 of the check valve 71 turn upward to suck the cleaning liquid in the lower part of the cleaning tank 2A from the opening portions 72 into the operation chamber 64. Accordingly, each time the tires T of the vehicle ride on the floats 66 of the pump means 61, the cleaning liquid is jetted upward from the cleaning jet hole 69 to clean the tires T and the lower part of the vehicle and collect the dirt in the cleaning tank 2A from the sludge removal jet holes 37 into the sludge removal part 4A. The dirt, sand, and the like collected in the sludge removal part 4A are discharged by the sludge removal conveyor 80 on a regular basis.

According to the tire cleaning device 50 as described above, the pump means 61 are pressurized by the weight of the vehicle to jet the cleaning liquid. This eliminates the need for a driving means such as a motor and reduces the manufacturing and running costs for the tire cleaning device 50. In addition, there is no need for a power supply system for operating the pump means 61, thereby reducing the facility costs for the entire cleaning facilities. Furthermore, the capacity of the pump means 61 for storing the cleaning water is increased to jet a sufficient amount of cleaning water onto the tires T and the lower part of the vehicle. The opening area of the cleaning jet holes 69 of the pump means 61 is adjusted to regulate properly the jetting speed of the cleaning water. Further, the vehicle desirably passes through the cleaning tank 2A at a low speed in order to allow the weight of the vehicle to act sufficiently on the pump means 61 and enhance cleaning performance. This reduces the mechanical load on the pump means 61 during the passage of the vehicle, thereby improving durability of the pump means 61. Moreover, the dirt and sand attached to the vehicle are collected into the sludge removal parts 4A to discharge easily the dirt and sand dropped in the cleaning tank 2A by the sludge removal conveyor 80. The floats 66 serving as the tread plates turn to the initial position by their buoyant force, and therefore the spring members 67 for returning the floats 66 to the initial position can be made small in size and lower in cost.

In the present embodiment, the vehicular attached matter removing device according to the present invention is applied to the tire cleaning device 50 that cleans dirt, sand, and the like off the tires T and the lower part of the vehicle by the cleaning liquid. Similarly, the present invention is also applied to the vehicular attached matter removing device that jets the air, instead of the cleaning liquid, onto the tires T and the lower part of the vehicle to blow water droplets off the tires T and the lower part of the vehicle. In this case, no cleaning liquid is put into the cleaning tank but the air instead of the cleaning liquid is jetted from the cleaning jet hole 69 of the pump means 61 to remove water droplets off the tires T and the lower part of the vehicle.

The embodiment of the present invention has been described so far. However, the present invention is not limited to the foregoing embodiment. As a matter of course, the present invention can be modified without deviating from the gist of the present invention.

### Reference Signs List

- 1: Tire cleaning device
- 2: Cleaning tank
- 3: Dividing wall
- 4: Sludge removal part
- 5: Slope
- 10L: Cleaning unit
- 10R: Cleaning unit
- 11: Pump means
- 12: H-shaped steel
- 12a: Flange part
- 12b: Flange part
- 12c: Web part
- 13: Pivot shaft
- 14: Outer peripheral surface cleaning jet hole
- 15: Side surface cleaning jet hole
- 16: Tread plate
- 17: Operation chamber
- 18: Operation chamber forming member
- 19: Biasing means
- 20: Check valve
- 21: Side part block plate
- 22: Non-slip member
- 23: Semi-cylindrical portion
- 23a: Connection flange
- 24: Retaining member
- 24a: Connection flange
- 25: Connection plate
- 26: Bolt
- 30: Cutout portion
- 31: Spring support plate
- 32: Operation rod
- 33: Pin member
- 34: Spring member
- 35: Operation chamber forming plate
- 36: Bottom part block plate
- 37: Sludge removal jet hole
- 38: Shaft support plate
- 39: Bracket plate
- 40: Block rod
- 41: Front part block plate
- 42: Introduction port
- 43: Valve body
- 2A: Cleaning tank
- 4A: Sludge removal part
- 50: Tire cleaning device
- 51: Wheel guide
- 60L: Cleaning unit
- 60R: Cleaning unit
- 61: Pump means
- 62: Side part frame
- 62a: Flange part
- 62b: Connection portion
- 63: Division member
- 63a: Flange part
- 63b: Web part
- 64: Operation chamber
- 65: Pivot shaft
- 66: Float
- 66a: Support plate
- 66b: Float main body
- 67: Spring member
- 68: Lower surface block plate
- 69: Cleaning jet hole
- 70: Cutout portion
- 71: Check valve
- 72: Opening portion
- 73: Valve body
- 74: Shaft member
- 75: Sludge removal jet hole
- 80: Sludge removal conveyor
- 81: Sludge removal path
- 82: Path forming member
- 83: Sprocket
- 84: Chain
- 85: Feed piece
- 86: Motor
- G: Gap
- T: Tire
- WL: Liquid level

## Claims

1. A vehicular attached matter removing device comprising a pump means that is pressurized by the weight of a vehicle to jet a fluid for removal of attached matter onto the vehicle.

2. The vehicular attached matter removing device according to claim 1, wherein the pump means jets a cleaning liquid or air as the fluid onto the vehicle.

3. The vehicular attached matter removing device according to claim 1 or 2, wherein
the pump means includes an operation chamber into which the fluid is filled and a biasing means that biases the operation chamber toward an initial state, and
when the weight of the vehicle acts on the pump means, the operation chamber contracts and jets the fluid in the operation chamber onto the vehicle, and when the weight of the vehicle no longer acts on the pump means, the biasing means returns the operation chamber to the initial state to flow the fluid into the operation chamber.

4. The vehicular attached matter removing device according to any one of claims 1 to 3, wherein
the pump means includes:
a tread plate that has a jet hole for the fluid and is turnably pivoted at an end portion on the back side of a passage direction of the vehicle;
an operation chamber forming member that forms the operation chamber under the tread plate;
a biasing means that biases constantly the tread plate toward a forward and upward inclined state in the passage direction of the vehicle and biases the operation chamber toward the initial state in which the liquid is filled; and
a check valve that permits inflow of the fluid into the operation chamber and restricts outflow of the fluid from the operation chamber.

5. The vehicular attached matter removing device according to claim 4, wherein the tread plate is detachably attached to the pump means.

6. The vehicular attached matter removing device according to any one of claims 3 to 5, wherein
a cleaning tank filled with a cleaning liquid as the fluid is provided,
the pump means is installed in the cleaning tank, and
when the vehicle passes through the cleaning tank, the pump means is pressurized by the weight of the vehicle to jet the cleaning liquid in the cleaning tank onto tires and remove the attached matter from the tires.

7. The vehicular attached matter removing device according to claim 6, wherein, as the biasing means, a spring member and/or a float is provided to bias the operation chamber toward the initial state.

8. The vehicular attached matter removing device according to claim 6 or 7, wherein the pump means is installed in the cleaning tank at least a tire passage position.

9. The vehicular attached matter removing device according to any one of claims 6 to 8, wherein the pump means jets the cleaning liquid onto the outer peripheral surfaces and side surfaces of the tires.

10. The vehicular attached matter removing device according to any one of claims 6 to 9, wherein the pump means jets part of the cleaning liquid onto a sludge removal part of the cleaning tank.

11. The vehicular attached matter removing device according to claim 10, wherein a sludge removal conveyor is provided to discharge the dirt in the sludge removal part outside the cleaning tank.
